# FASCICULE DE BREVET EUROPEEN

(11) **EP 0 919 322 B1**
(45) Date de publication et mention de la délivrance du brevet: **21.01.2004**
(21) Numéro de dépôt: 98402632.8
(22) Date de dépôt: 22.10.1998
(51) Int. Cl.: B23P 15/04

(54) **Procédé de fabrication d'une aube de turbine bimétallique et utilisation**
Herstellungsverfahren für bimetallische Gasturbinenschaufel und Verwendung
Manufacturing method for bimetallic turbine blade and use

(30) Priorité: 25.11.1997 FR 9714791
(43) Date de publication de la demande: 02.06.1999
(73) Titulaire: FRAMATOME, 92400 Courbevoie (FR)
(72) Inventeur: Millet, François, 71200 le Creusot (FR); Leroy, Daniel, 71200 le Creusot (FR)
(74) Mandataire: Kremer, Robert A.M.

(56) Documents cités:
- EP-A- 0 605 152
- GB-A- 1 253 187
- GB-A- 2 071 778
- GONSEROVSKII F G ET AL: "EFFICIENCY OF WELDING METHODS FOR REPAIRING STEAM TURBINE BLADES AND HARDENING THEIR INLET EDGES" WELDING INTERNATIONAL, vol. 8, no. 5, 1 janvier 1994, pages 390-393, XP000441957

## Description

L'invention concerne un procédé de fabrication d'une aube de turbine bimétallique et en particulier d'une aube pour une turbine à vapeur destinée à l'étage basse pression de la turbine à vapeur.

Les machines tournantes telles que les turbines à vapeur comportent des aubes profilées montées sur des parties fixes ou mobiles en rotation des machines tournantes qui entrent en contact avec un fluide traversant la machine tournante à très grande vitesse, pendant le fonctionnement de la machine tournante.

Les aubes des machines tournantes comportent un bord d'attaque dirigé vers l'écoulement du fluide incident sur l'aube de la machine tournante et un bord de fuite disposé vers l'arrière de l'aube en considérant le sens de circulation du fluide.

Dans certains cas; l'aube de la machine tournante est soumise, au voisinage de son bord d'attaque, à une forte érosion de la part du fluide en circulation.

En particulier, dans les turbines à vapeur, les aubes du ou des derniers étages de la turbine, ou étages à basse pression, sont soumises à une forte érosion, au voisinage de leur bord d'attaque, du fait que la vapeur présente alors une forte humidité et transporte des gouttelettes d'eau qui viennent s'écraser sur le bord d'attaque de l'aube. Le contact des gouttelettes d'eau avec le bord d'attaque de l'aube produit un phénomène d'érosion qui se traduit par une perte de métal de l'aube dans une partie voisine de son bord d'attaque. Du fait de l'usure dissymétrique des aubes de rotor des étages basses pression des turbines à vapeur, on peut observer, après un certain temps de fonctionnement des turbines, un déséquilibrage de l'ensemble rotor. Ce déséquilibrage a pour effet de favoriser la naissance de vibrations entraînant des sollicitations répétées sur le rotor qui peuvent devenir dangereuses et conduire à la rupture du rotor.

Lorsqu'on observe de telles vibrations, on est obligé d'arrêter la turbine et, de ce fait, l'installation comportant cette turbine.

Dans le cas de vastes installations telles que des centrales nucléaires ou thermiques, il peut en résulter de très lourdes pertes d'exploitation.

D'autre part, il est nécessaire d'effectuer une réparation ou un remplacement des aubes de rotor qui ont été détériorées, ce qui peut être une opération longue et coûteuse.

Pour limiter l'érosion des bords d'attaque des aubes de machines tournantes, et en particulier des aubes de turbines, on a proposé de réaliser un revêtement anti-usure sur une partie de l'aube voisine de son bord d'attaque et sur une fraction de la longueur du bord d'attaque, dans la partie externe de l'aube, dans la direction radiale de la machine tournante.

Un tel revêtement ou rechargement, qui doit être effectué à haute température sur l'aube usinée à l'état fini, peut entraîner une dégradation des propriétés mécaniques du métal constituant l'aube ou certaines déformations de l'aube dues aux contraintes thermiques subies pendant le revêtement à haute température.

On a donc proposé, en particulier dans le US-A-5,351,395, de réaliser le renforcement contre l'usure d'une aube de turbine au voisinage de son bord d'attaque en rapportant dans la zone du bord d'attaque et en fixant par soudage sur le corps de l'aube un insert en un matériau dur résistant à l'usure ou en un matériau à durcissement par traitement thermique différent du matériau constituant le corps de l'aube de turbine. L'insert de renforcement de l'aube est fixé sur le corps de l'aube qui peut être obtenu par moulage de précision. L'insert, qui est rapporté et fixé sur une partie du corps de l'aube prévue à cet effet, présente une forme brute et doit être usiné pour être mis à la forme et au profil de l'aube de turbine au voisinage de son bord d'attaque.

Après soudage de l'insert de renforcement sur l'ébauche moulée du corps de turbine, on réalise l'usinage de finition de l'ébauche moulée du corps de l'aube et l'usinage de mise en forme de l'insert. On effectue enfin un traitement thermique de durcissement permettant de développer les caractéristiques de dureté et de résistance à l'usure de l'insert.

Toutefois, l'ébauche moulée du corps de l'aube présente une forme proche de la forme définitive de l'aube et en particulier une forme vrillée et cintrée. L'insert doit présenter un profil permettant d'assurer une continuité avec le corps de l'aube dans sa zone voisine du bord d'attaque. Du fait de la forme complexe du corps de l'aube, la conception et la réalisation de l'insert peuvent être extrêmement délicates, ce qui a une influence non négligeable sur le coût des aubes de turbine bimétalliques réalisées par ce procédé.

Le but de l'invention est donc de proposer un procédé de fabrication d'une aube de turbine bimétallique comportant un corps en un premier matériau métallique et un insert en un second matériau métallique à forte résistance à l'usure, dans lequel est réalisée une partie au moins d'un bord d'attaque de l'aube, ce procédé permettant de fabriquer l'aube de turbine bimétallique de manière simple et pour un coût modéré.

Dans ce but :
- on usine, dans un bloc métallique de forme géométrique simple constitué du premier matériau métallique, une cavité de réception de forme géométrique simple,
- on réalise et on fixe dans la cavité un élément de forme géométrique simple constitué du second matériau, pour obtenir un bloc métallique composite, et
- on usine l'aube de turbine dans le bloc composite, le corps de l'aube étant usiné dans le bloc métallique constitué du premier matériau et l'insert dans l'élément constitué du second matériau.

L'élément constitué du second matériau peut être préfabriqué, puis fixé par soudage dans la cavité.

L'élément constitué du second matériau peut aussi être réalisé par dépôt et solidification d'un métal fondu dans la cavité.

De préférence, le bloc métallique constitué du premier matériau et l'élément métallique constitué du second matériau présentent une forme sensiblement parallélépipédique.

Afin de bien faire comprendre l'invention, on va maintenant décrire, à titre d'exemple, en se référant aux figures jointes en annexe, une aube de turbine à vapeur bimétallique et sa réalisation par le procédé de l'invention.

La figure 1 est une vue en perspective d'une aube bimétallique de turbine à vapeur.

La figure 2 est une vue en élévation d'un bloc métallique composite pour la réalisation d'une aube de turbine bimétallique par le procédé de l'invention.

La figure 3 est une vue de dessus du bloc représenté sur la figure 2.

La figure 4 est une vue en élévation d'une aube bimétallique réalisée par le procédé suivant l'invention, à l'état fini.

La figure 5 est une vue de dessus de l'aube de turbine à l'état fini représentée sur la figure 4.

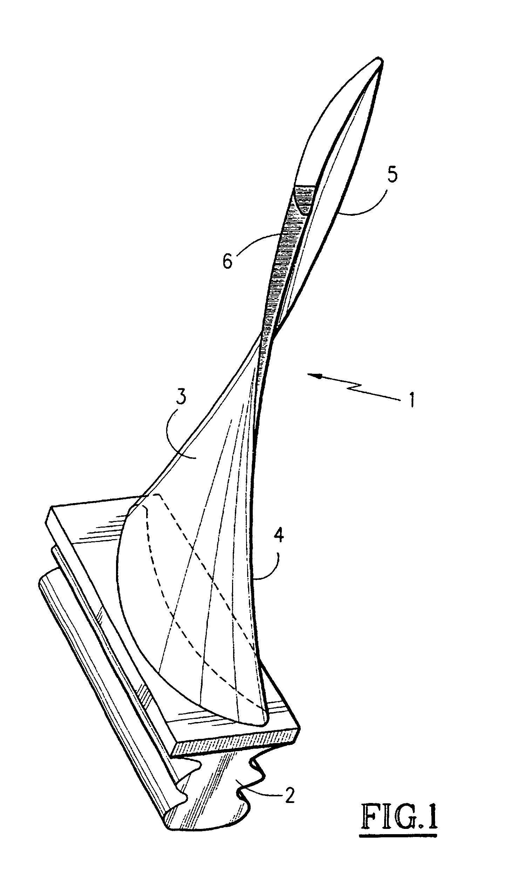

Sur la figure 1, on a représenté une aube de turbine à vapeur qui peut être de préférence une aube de l'étage basse pression de la turbine, désignée de manière générale par le repère 1.

L'aube 1 comporte un pied 2 ayant une forme profilée permettant la fixation de l'aube de turbine 1 sur un rotor basse pression de la turbine à vapeur ainsi qu'une ailette 3, solidaire du pied 2 et généralement venue de matière avec le pied 2, présentant une forme complexe, courbe, cintrée et vrillée.

La partie d'ailette 3 de l'aube 1 comporte un bord d'attaque 4 et un bord de fuite 5, au niveau desquels la partie d'ailette 3 de l'aube 1 présente une épaisseur minimale. Entre le bord d'attaque 4 et le bord de fuite 5, les sections transversales de la partie d'ailette 3 de l'aube présentent une forme en fuseau effilé.

L'aube de turbine 1 représentée sur la figure 1 est une aube bimétallique qui comporte un insert 6 constituant une partie de l'ailette 3 de l'aube 1 au voisinage de son bord d'attaque 4, s'étendant, dans la partie externe de l'aube dans la direction radiale, sur une certaine longueur le long du bord d'attaque.

L'aube bimétallique 1 est constituée d'un corps monobloc comportant le pied 2 et la partie d'ailette 3 à l'exception d'un évidement dans lequel est logé l'insert 6 ainsi que l'insert logé dans l'évidement et solidaire du corps de l'aube 1.

Le corps de l'aube 1 est réalisé en un matériau approprié à son utilisation dans l'étage basse pression d'une turbine à vapeur et, par exemple, en un acier inoxydable à 13 % de chrome.

L'insert 6 est en un matériau dur résistant à l'usure tel qu'un alliage à base de cobalt renfermant du chrome et du tungstène, par exemple un Stellite de grade 6 ou de grade 12.

Selon l'invention, une aube de turbine bimétallique telle que représentée sur la figure 1 peut être réalisée de manière relativement simple et pour un coût modéré par le procédé de l'invention.

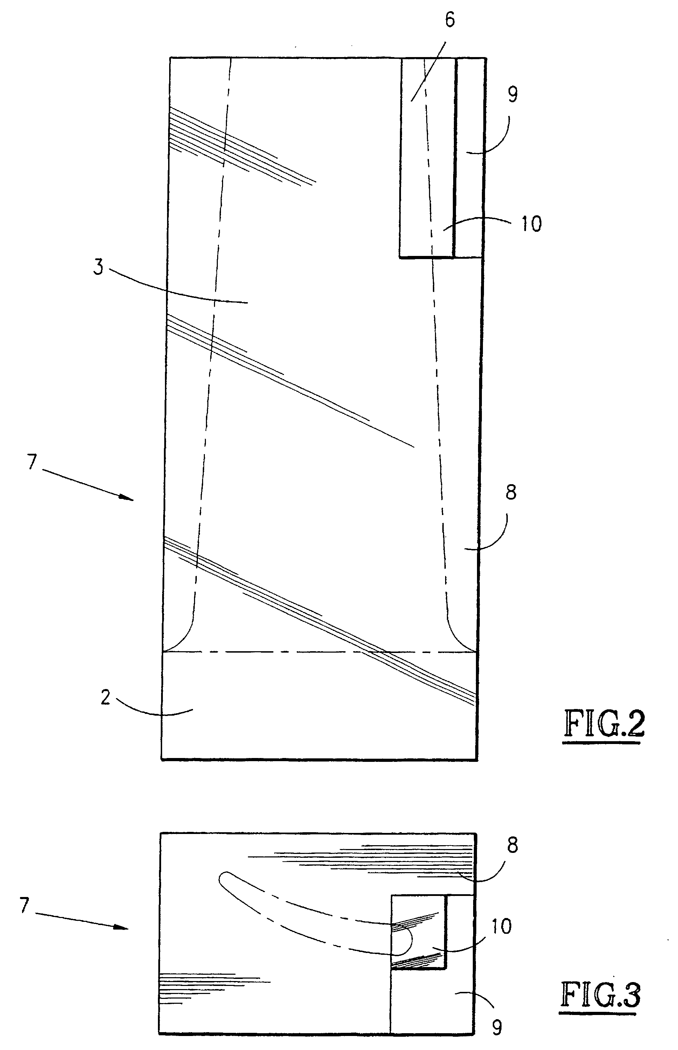

Sur les figures 2 et 3, on a représenté un bloc métallique composite bimétallique désigné de manière générale par le repère 7, dans lequel peut être usinée une aube bimétallique telle que représentée sur la figure 1.

Le bloc bimétallique 7 présente une forme générale parallélépipédique.

Selon le procédé de l'invention, pour réaliser le bloc bimétallique 7, on réalise dans un premier temps l'usinage d'un bloc parallélépipédique 8 en un premier matériau métallique qui est un matériau habituel pour la fabrication d'aubes de turbine à vapeur. Le bloc de départ 8 peut être constitué par exemple par un acier à 13 % de chrome et peut être obtenu par forgeage d'un produit coulé tel qu'un lingot. Le bloc 8 pourrait être également découpé dans un demi produit tel qu'une barre à section rectangulaire. On usine le bloc 8 pour réaliser une cavité de forme parallélépipédique 9 occupant un angle de la section transversale du bloc 8 et s'étendant suivant la hauteur du bloc 8, sur une longueur correspondant sensiblement à la longueur de l'insert 6 à réaliser suivant le bord d'attaque de l'aube de turbine bimétallique mise en fabrication.

On découpe ensuite, dans une barre à section carrée en un matériau résistant à l'usure tel qu'un Stellite 6 ou 12, un élément 10 de forme parallélépipédique dont la hauteur est sensiblement égale à la hauteur de la cavité 9 du bloc 8 et dont la section présente des dimensions inférieures à la section transversale de la cavité 9 . Plus généralement, l'élément 10 peut être obtenu par découpage d'un produit profilé ayant une section de forme quelconque.

On pourrait également élaborer l'élément 10 par moulage ou par forgeage d'un bloc de dimensions voulues.

L'élément préfabriqué 10 en matériau résistant à l'usure est mis en place dans l'angle intérieur de la cavité 9, de manière à occuper toute la hauteur de la cavité 9. Le bloc 8 et l'élément 10 sont maintenus en contact dans leur position d'assemblage, tel que représenté sur les figures 2 et 3, par des pinces.

On réalise le préchauffage au chalumeau oxy-acétylénique de l'ensemble constitué par le bloc 8 et l'élément préfabriqué 10 placé dans la cavité 9 par exemple entre 550°C et 780°C.

On réalise l'assemblage de l'élément préfabriqué 10 et du bloc 8 par soudage avec métal d'apport ou brasage en maintenant la température des pièces à assembler dans l'intervalle de température de 550 à 780°C.

On laisse refroidir le bloc bimétallique 7 obtenu à l'air libre.

On réalise ensuite un contrôle de la soudure de jonction obtenue par brasage, par un procédé de contrôle par ressuage du type fluorescent. On effectue, si nécessaire, des réparations de la soudure.

On soumet l'assemblage bimétallique à un traitement thermique de qualité (qui modifie les caractéristiques du matériau), de détensionnement ou de relaxation des contraintes dues au soudage de la pièce rapportée.

On réalise ensuite l'usinage complet de l'aube de turbine dans le bloc bimétallique 7.

Sur les figures 2 et 3, on a représenté en traits interrompus le contour de l'aube bimétallique 1 dont on réalise l'usinage à partir du bloc bimétallique 7.

Le corps de l'aube bimétallique 1 comportant le pied 2 et la partie d'ailette 3 de l'aube à l'exception de l'insert est usiné dans le bloc métallique 8 en acier à 13 % de chrome.

L'insert 6, disposé suivant le bord d'attaque 4 de l'aube, est usiné dans l'élément rapporté 10 en alliage résistant à l'usure.

L'usinage de l'aube de turbine 1 dans le bloc bimétallique 7 est réalisé de la même manière que l'usinage d'une aube métallique classique monométallique, dans un bloc homogène.

Les lignes en pointillés représentant les contours de l'aube 1 sur les figures 2 et 3 constituent les traces des surfaces d'usinage de l'aube dans un plan longitudinal et dans un plan transversal, respectivement;

Bien entendu, le bloc métallique 8 et l'élément rapporté 10 ont des dimensions optimisées par rapport aux dimensions des différentes parties de l'aube bimétallique à réaliser, de manière à limiter les volumes de matière à éliminer, lors de l'usinage du bloc bimétallique. La section droite du bloc métallique 8 correspond sensiblement à la section du pied de l'aube à réaliser.

L'usinage du bloc bimétallique comporte un premier usinage pour réaliser l'ébauche de la partie d'ailette 3 et un second usinage de finition de la partie constituant l'ailette 3. On réalise également l'usinage de l'ébauche du pied 2 puis la finition du pied 2 par une opération par exemple de rectification.

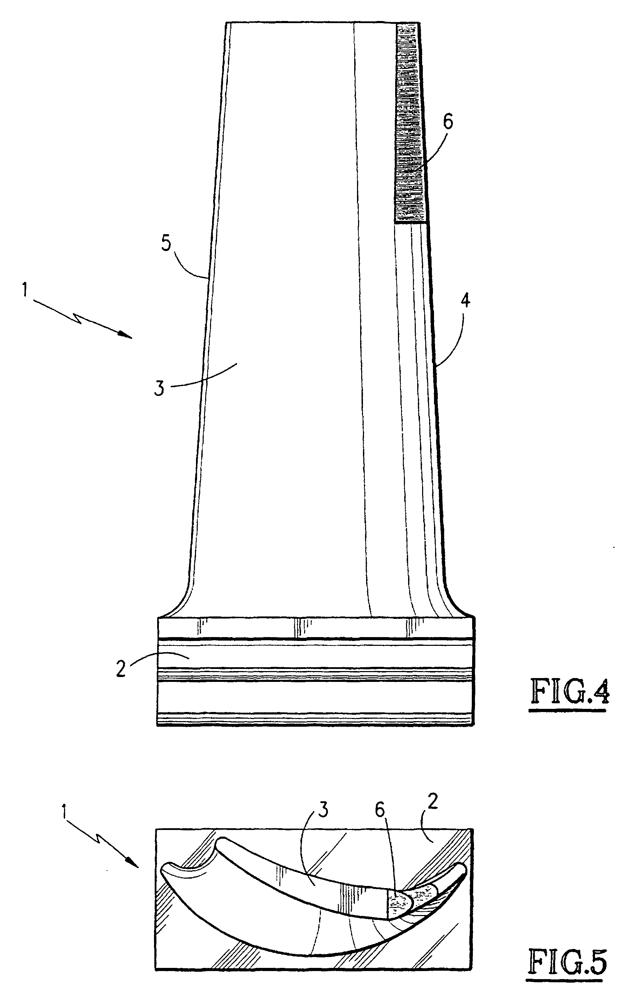

Comme il est visible sur les figures 4 et 5, l'aube 1 à l'état fini comporte un corps lui-même constitué du pied 2 et d'une partie d'ailette 3, en acier inoxydable à 13 % de chrome et un élément rapporté 6, fixé par soudage sur le corps de l'aube 1 en Stellite.

L'élément rapporté 6 est disposé dans une partie du corps de l'aube 1 au voisinage du bord d'attaque 4 qui est usiné pour partie dans l'élément rapporté 6, et pour sa partie restante, dans le corps de l'aube 1.

De préférence, l'élément rapporté 6, constituant une partie du bord d'attaque, couvre environ deux-tiers du bord d'attaque 4 de l'aube 1.

L'aube 1 bimétallique dans son ensemble présente une parfaite cohésion et les surfaces courbes délimitant la partie d'ailette comportant l'insert 6 sont parfaitement continues, du fait qu'elles ont été usinées dans la pièce bimétallique d'une manière analogue aux surfaces courbes délimitant la partie d'ailette d'une aube monométallique usinée dans une pièce de composition homogène.

En outre, le bloc métallique et l'élément rapporté de la pièce bimétallique de forme géométrique simple peuvent être obtenus facilement par moulage, forgeage, ou à partir de demi produits de forme et de section voulues.

L'élément rapporté constitué du second matériau peut être réalisé par dépôt et solidification d'un métal fondu dans la cavité du bloc métallique constitué du premier matériau. Le dépôt de métal peut être réalisé par tout procédé de rechargement ou soudage avec fusion d'un métal d'apport, tel que le procédé TIG ou encore par projection de poudre.

Dans tous les cas on peut réaliser, par exemple après usinage de l'aube de turbine, un traitement thermique de qualité, de détensionnement ou de relaxation des contraintes et un contrôle dimensionnel de l'aube de turbine usinée.

L'invention ne se limite pas au mode de réalisation qui a été décrit.

C'est ainsi que le bloc métallique constitué du premier matériau, l'élément rapporté et la cavité de réception de cet élément dans le bloc métallique peuvent présenter des formes différentes d'une forme parallélépipédique.

Dans tous les cas cependant, le bloc métallique, l'élément rapporté et la cavité doivent présenter une forme géométrique simple, et généralement prismatique droite, de manière à faciliter le formage ou l'obtention de ces éléments et l'assemblage du bloc bimétallique.

Le procédé suivant l'invention est donc tout à fait différent d'un procédé dans lequel on fixe un élément rapporté sur une ébauche d'une aube de turbine, de forme complexe. Dans le cas de l'invention, la forme complexe de l'aube est obtenue directement par usinage de l'aube bimétallique, par une méthode d'usinage analogue à l'usinage d'une aube de turbine dans une pièce de composition homogène.

Le premier matériau constituant le corps de l'aube de turbine et le second matériau constituant l'insert de renforcement du bord d'attaque de l'aube peuvent être différents des matériaux indiqués ci-dessus à titre d'exemple.

Par exemple, le corps de l'aube peut être réalisé en un acier inoxydable à durcissement par vieillissement ou encore en un alliage non ferreux, tel qu'un alliage de titane.

L'élément de renforcement rapporté peut être en acier inoxydable à durcissement par précipitation et/ou renfermant des éléments d'alliage durcissants. De manière générale, on peut utiliser tout matériau de type métallique présentant une forte résistance à l'usure, par exemple des matériaux comportant une matrice métallique dans laquelle sont dispersés des composés durcissants.

L'invention s'applique non seulement à la fabrication d'aubes pour turbine à vapeur mais encore à la fabrication d'aubes pour toute machine tournante telle que des turbines à gaz, des compresseurs ou des pompes.

## Revendications

1. Procédé de fabrication d'une aube de turbine bimétallique comportant un corps en un premier matériau métallique et un insert (6) en un second matériau métallique à forte résistance à l'usure, dans lequel est réalisée une partie au moins d'un bord d'attaque (4) de l'aube (1), **caractérisé par le fait :**
- **qu'**on usine dans un bloc métallique (8) de forme géométrique simple constitué du premier matériau métallique, une cavité (9) de réception de forme géométrique simple,
- **qu'**on réalise et qu'on fixe dans la cavité (9) un élément (10) de forme géométrique simple constitué du second matériau pour obtenir un bloc métallique composite (7), et
- **qu'**on usine l'aube de turbine (1) dans le bloc composite (7), le corps de l'aube étant usiné dans le bloc métallique (8) constitué du premier matériau et l'insert (6) dans l'élément (10) de forme simple constitué du second matériau.

2. Procédé suivant la revendication 1, **caractérisé par le fait que** l'élément (10) constitué du second matériau est préfabriqué, puis fixé par soudage dans la cavité (9).

3. Procédé suivant la revendication 2, **caractérisé par le fait qu'**on fixe l'élément (10) de forme géométrique simple constitué du second matériau dans la cavité (9) du bloc métallique (8) constitué du premier matériau métallique par une opération de soudage avec métal d'apport ou de brasage.

4. Procédé suivant l'une quelconque des revendications 2 et 3, **caractérisé par le fait que**, préalablement à la fixation par soudage de l'élément (10) de forme géométrique simple constitué du second matériau dans la cavité (9) du bloc métallique constitué du premier matériau, on préchauffe le bloc métallique (8) constitué du premier matériau et l'élément (10) constitué du second matériau.

5. Procédé suivant la revendication 4, **caractérisé par le fait que** le préchauffage et le soudage du bloc métallique (8) et de l'élément (10) sont réalisés à une température comprise entre 550 et 780°C.

6. Procédé suivant l'une quelconque des revendications 2 à 5, **caractérisé par le fait que** l'élément préfabriqué (10) de forme géométrique simple constitué du second matériau est obtenu par découpage d'un produit profilé telle qu'une barre.

7. Procédé de fabrication suivant l'une quelconque des revendications 2 à 6, **caractérisé par le fait qu'**on réalise, après soudage de l'élément (10) constitué du second matériau dans la cavité (9) du bloc métallique (8) constitué du premier matériau, le contrôle par ressuage d'une zone de soudure entre l'élément (10) constitué du second matériau et le bloc métallique (8) constitué du premier matériau et qu'on effectue éventuellement une réparation de la soudure.

8. Procédé suivant la revendication 1, **caractérisé par le fait que** l'élément (10) constitué du second matériau est réalisé par dépôt et solidification d'un métal fondu dans la cavité (9).

9. Procédé suivant la revendication 1, **caractérisé par le fait que** le bloc métallique (8) constitué du premier matériau métallique, l'élément (10) de forme simple constitué du second matériau métallique et la cavité de réception de l'élément (10) présentent une forme sensiblement parallélépipédique.

10. Procédé suivant l'une quelconque des revendications 1 à 9, **caractérisé par le fait que** le bloc métallique (8) constitué du premier matériau métallique est réalisé par forgeage.

11. Procédé suivant l'une quelconque des revendications 1 à 10, **caractérisé par le fait que** le premier matériau métallique est un acier inoxydable et le second matériau métallique un alliage de cobalt résistant à l'usure renfermant du chrome et du tungstène.

12. Procédé suivant la revendication 11, **caractérisé par le fait que** le premier matériau est un acier inoxydable à 13 % de chrome et le second matériau un Stellite de grade 6 ou 12.

13. Procédé suivant l'une quelconque des revendications 1 à 12, **caractérisé par le fait qu'**après usinage de l'aube de turbine (1 ) dans le bloc composite (7), on réalise un traitement thermique de qualité, de détensionnement ou de relaxation des contraintes et un contrôle dimensionnel de l'aube de turbine (1) usinée.

14. Utilisation d'un procédé suivant l'une quelconque des revendications 1 à 13, pour la fabrication d'une aube d'un étage basse pression d'une turbine à vapeur.

## Patentansprüche

1. Verfahren zur Herstellung einer bimetallischen Turbinenschaufel, die einen Körper aus einem ersten metallischen Material und einen Einsatz (6) aus einem zweiten metallischen Material mit großer Verschleißfestigkeit aufweist, aus dem zumindest ein Teil einer Vorderkante (4) der Schaufel (1) hergestellt wird, **dadurch gekennzeichnet, dass**
- in einem aus dem ersten metallischen Material bestehenden Metallblock (8) von einfacher geometrischer Form durch maschinelle Bearbeitung ein Aufnahmehohlraum (9) von einfacher geometrischer Form hergestellt wird,
- ein aus dem zweiten Material bestehendes Element (10) von einfacher geometrischer Form hergestellt und im Hohlraum (9) befestigt wird, um einen metallischen Verbundblock (7) zu erhalten, und
- die Turbinenschaufel (1) aus dem Verbundblock (7) durch maschinelle Bearbeitung hergestellt wird, wobei der Körper der Schaufel aus dem aus dem ersten Material bestehenden Metallblock (8) und der Einsatz (6) aus dem aus dem zweiten Material bestehenden Element (10) von einfacher Form maschinell hergestellt wird.

2. Verfahren nach Anspruch 1, **dadurch gekennzeichnet, dass** das aus dem zweiten Material bestehende Element (10) vorgefertigt und dann durch Schweißen im Hohlraum (9) befestigt wird.

3. Verfahren nach Anspruch 2, **dadurch gekennzeichnet, dass** das aus dem zweiten Material bestehende Element (10) von einfacher geometrischer Form im Hohlraum (9) des aus dem ersten metallischen Material bestehenden Metallblocks (8) durch einen Schweißvorgang mit einem Schweißwerkstoff oder einem Lot befestigt wird.

4. Verfahren nach einem der Ansprüche 2 und 3, **dadurch gekennzeichnet, dass** vor der Befestigung des aus dem zweiten Material bestehenden Elements (10) von einfacher geometrischer Form im Hohlraum (9) des aus dem ersten Material bestehenden Metallblocks durch Schweißen der aus dem ersten Material bestehende Metallblock (8) und das aus dem zweiten Material bestehende Element (10) vorgewärmt werden.

5. Verfahren nach Anspruch 4, **dadurch gekennzeichnet, dass** das Vorwärmen und das Schweißen des Metallblocks (8) und des Elements (10) bei einer Temperatur zwischen 550 und 780 °C erfolgen.

6. Verfahren nach einem der Ansprüche 2 bis 5, **dadurch gekennzeichnet, dass** das aus dem zweiten Material bestehende, vorgefertigte Element (10) von einfacher geometrischer Form durch Ausschneiden eines Profilteils wie zum Beispiel einer Stange hergestellt wird.

7. Verfahren nach einem der Ansprüche 2 bis 6, **dadurch gekennzeichnet, dass** nach dem Verschweißen des aus dem zweiten Material bestehenden Elements (10) im Hohlraum (9) des aus dem ersten Material bestehenden Metallblocks (8) die Prüfung eines Schweißnahtbereichs zwischen dem aus dem zweiten Material bestehenden Element (10) und dem aus dem ersten Material bestehenden Metallblock (8) durch Schweißwasserbildung durchgeführt wird, und dass ggf. die Schweißnaht ausgebessert wird.

8. Verfahren nach Anspruch 1 , **dadurch gekennzeichnet, dass** das aus dem zweiten Material bestehende Element (10) durch Auftragen und Verfestigen eines geschmolzenen Metalls im Hohlraum (9) erhalten wird.

9. Verfahren nach Anspruch 1, **dadurch gekennzeichnet, dass** der aus dem ersten metallischen Material bestehende Metallblock (8), das aus dem zweiten metallischen Material bestehende Element (10) von einfacher Form und der Hohlraum zur Aufnahme des Elements (10) eine im wesentlichen parallelepipedische Form aufweisen.

10. Verfahren nach einem der Ansprüche 1 bis 9, **dadurch gekennzeichnet, dass** der aus dem ersten metallischen Material bestehende Metallblock (8) durch Schmieden hergestellt wird.

11. Verfahren nach einem der Ansprüche 1 bis 10, **dadurch gekennzeichnet, dass** das erste metallische Material ein rostfreier Stahl und das zweite metallische Material eine verschleißfeste Kobaltlegierung ist, die Chrom und Wolfram enthält.

12. Verfahren nach Anspruch 11, **dadurch gekennzeichnet, dass** das erste Material ein rostfreier Stahl mit 13 % Chrom und das zweite Material ein Stellit 6 oder ein Stellit 12 ist.

13. Verfahren nach einem der Ansprüche 1 bis 12, **dadurch gekennzeichnet, dass** nach der maschinellen Herstellung der Turbinenschaufel (1) aus dem Verbundblock (7) eine Qualitäts-Wärmebehandlung, ein Entspannungsglühen oder eine Spannungsrelaxation und eine Prüfung der Abmessungen der maschinelle bearbeiteten Turbinenschaufel (1) durchgeführt werden.

14. Verwendung eines Verfahrens nach einem der Ansprüche 1 bis 13 zur Herstellung einer Schaufel einer Niederdruckstufe einer Dampfturbine.

## Claims

1. A method of manufacturing a bimetallic turbine blade including a body made of a first metallic material and an insert (6) made of a second metallic material having a high resistance to wear, from which at least a portion of a leading edge (4) of the blade (1) is made, **characterized in that**:
- a receiving cavity (9) having a simple geometrical shape is machined in a metallic block (8) having a simple geometrical shape made of the first metallic material,
- a member (10) having a simple geometrical shape made of the second material is made and fixed into the cavity (9) to produce a composite bimetallic block (7), and
- the turbine blade (1) is machined from the composite block (7), the body of the blade being machined in the metallic block (8) made of the first material and the insert (6) being machined from the member (10) of simple shape made of the second material.

2. A method according to claim 1 **characterized in that** the member (10) made of the second material is prefabricated and then welded into the cavity (9).

3. A method according to claim 2 **characterized in that** the member (10) of simple geometrical shape made of the second material is fixed into the cavity (9) of the metallic block (8) made of the first metallic material by welding with a filler metal or by brazing.

4. A method according to claim 2 or claim 3 **characterized in that**, before welding the member (10) of simple geometrical shape made of the second material into the cavity (9) of the metallic block made of the first material, the metallic block (8) made of the first material and the member (10) made of the second material are preheated.

5. A method according to claim 4 **characterized in that** the metallic block (8) and the member (10) are preheated and welded at a temperature in the range 550°C to 780°C.

6. A method according to any one of claims 2 to 5 **characterized in that** the prefabricated member (10) having a simple geometrical shape made of the second material is obtained by cutting a constant profile product such as a bar.

7. A manufacturing method according to any one of claims 2 to 6 **characterized in that**, after welding the member (10) made of the second material into the cavity (9) in the metallic block (8) made of the first material, a weld area between the member (10) made of the second material and the metallic block (8) made of the first material is inspected by dye penetration and the weld is repaired if necessary.

8. A method according to claim 1 **characterized in that** the member (10) made of the second material is made by depositing and solidifying a molten metal in the cavity (9).

9. A method according to claim 1 **characterized in that** the metallic block (8) made of the first metallic material, the member (10) of simple shape made of the second metallic material and the cavity receiving the member (10) have a substantially parallelepiped shape.

10. A method according to any one of claims 1 to 9 **characterized in that** the metallic block (8) made of the first metallic material is forged.

11. A method according to any one of claims 1 to 10 **characterized in** the first metallic material is stainless steel and the second metallic material is a wear resistant cobalt alloy containing chromium and tungsten.

12. A method according to claim 11 **characterized in that** the first material is stainless steel containing 13% chromium and the second material is grade 6 or grade 12 stellite.

13. A method according to any one of claims 1 to 12 **characterized in that** after machining the turbine blade (1) from the composite block (7) a quality heat treatment is carried out to relieve stresses and the dimensions of the machined turbine blade (1) are checked.

14. Use of a method according to any one of claims 1 to 13 to manufacturer a blade for a low-pressure stage of a steam turbine.
